# EUROPEAN PATENT SPECIFICATION

(11) **EP 2 182 253 B1**
(45) Date of publication and mention of the grant of the patent: **01.02.2012**
(21) Application number: 08167968.0
(22) Date of filing: 30.10.2008
(51) Int. Cl.: F16H 61/12, H01H 3/00

(54) **Relay control of a transmission direction control system**
Relaissteuerung eines Übertragungsrichtungs-Steuerungssystems
Contrôle par relais d'un système de commande de direction de transmission

(43) Date of publication of application: 05.05.2010
(73) Proprietor: Caterpillar, Inc., Peoria, IL 61629-6490 (US)
(72) Inventor: Conway, Simon Richard, Desford, Leicestershire LE9 9JT (GB); Smith, Richard George Leslie, Desford, Leicestershire LE9 9JT (GB); Coombs, Edwin George, Desford, Leicestershire LE9 9JT (GB)
(74) Representative: Modiano, Micaela Nadia

(56) References cited:
- EP-A- 0 181 006
- EP-A- 0 403 273
- US-A- 6 139 468

## Description

### Technical Field

This patent disclosure relates generally to a transmission direction control system and a related method of controlling the transmission direction control system for a vehicle, in particular for back hoe loaders.

### Background

This patent disclosure relates generally to the field of transmission systems for construction vehicles, such as back hoe loaders. Back hoe loaders may fulfil a variety of different tasks at a construction site. The transmission systems used for this kind of vehicle may either be mechanically or hydraulically operated. The present disclosure may be mainly directed to a hydraulic system, where the transmission may be operated by actuation of solenoid valves.

The transmission system may usually have three operational modes, a forward direction mode, a reverse direction mode and a neutral position. The forward and reverse direction modes may be used to move the vehicle at the operation sites; the neutral mode may be used when stopping or parking the vehicle.

Such vehicles may be very heavy and it may be important to prevent the vehicle from moving due to unforeseen circumstances, such as electrical failures. Known systems for a transmission direction control system may have "single-side" control of the transmission solenoid valves. In such systems, only one side of the solenoid valves may be switched and the other side may be either directly connected to a power source or to the ground terminal.

Unfortunately, if a short-circuit occurs, the solenoid valve may be accidentally activated and the vehicle may start to move unintentionally. The short-circuit may occur by bridging the switching device at either the plus or the minus terminals, depending which terminal may be activating the solenoid valve. In order to prevent an uncommanded movement of such vehicle, a system using double sided switching is used, where the switch may interrupt the power supply on both sides of the solenoid valve, i.e. at the positive and negative terminal of the valve. In this manner, if an unforeseen connection between the power source and the ground terminal occurs, the solenoid valves may not be actuated.

In a vehicle with a lever for moving the vehicle into the moving and parking positions, the lever may be connected to a switching circuit. The switching circuit may either activate one or more solenoid valves or may leave the valves inactivated.

When a single point failure occurs in the foregoing system, the valves may be activated due to a contact of the input terminals to the power source, which may result in an unwanted movement of the vehicle. In order to prevent this, known vehicles may have a system that may disconnect the power source and the ground terminal when the vehicle is in the idle position or parking position. Such double sided switching interruption may provide a certain enhancement in convenience, but it may involve the use of additional switches and cabling when applied to a standard single side controlled vehicle.

Therefore, there may be a desire to apply a single sided control of a transmission direction control system without compromising the systems ability to tolerate single point electrical failures, i.e. one that does not engage forward or reverse movements of the vehicle in the event of a short circuit.

US6139468 discloses an automatic transmission control system having a failure mode management circuit that monitors the shift control logic and the response of the transmission system to operator commands, as well as the transmission range selector signals delivered to the shift control logic whereby multiple control redundancies in the electronic range control system ensure that system failures and component failures develop an error signal to alert the driver of possible malfunctions during the range selection period.

It is thus seen that there is a need for an advanced control of a transmission direction control system, which is cost-effective, easy to maintain and applicable to a large variety of vehicles.

### Brief Summary of the Invention

In a first aspect, the present disclosure describes a transmission direction control system of a vehicle according to claim 1, comprising: a transmission circuit having a transmission actuator to activate a corresponding solenoid and an actuating switch for controlling an electrical flow through the transmission circuit; a control circuit configured to actuate said switch; and a control configured for electrical communication with the transmission actuator and the control circuit to alternately activate the transmission circuit and the control circuit.

In a second aspect, the present disclosure describes a method of controlling a transmission direction according to claim 13 comprising: actuating a control configured for electrical communication with a transmission circuit and a control circuit, the transmission circuit including a transmission actuator to activate a corresponding solenoid and an actuating switch, the control circuit being configured to actuate the switch, wherein actuation of the control alternately activates the transmission circuit and the control circuit for controlling an electrical flow through the transmission circuit.

### Brief Description of the Drawings

The foregoing and other features and advantages of the present disclosure will be more fully understood from the following description of various embodiments, when read together with the accompanying drawings, in which:
Fig. 1 is a circuit diagram of a transmission direction control system engaged in a neutral configuration according to the present disclosure;
Fig. 2 is a circuit diagram of the transmission direction control system in a forward configuration according to the present disclosure;
Fig. 3 is a isometric view of a lever control for the transmission direction control system according to the present disclosure.

### Detailed Description

This disclosure generally relates to a transmission direction control system for a vehicle. In one embodiment, it relates to a relay arrangement interrupting the transmission circuit of a vehicle.

In another embodiment, it relates to a method for interrupting a transmission direction control system using a relay.

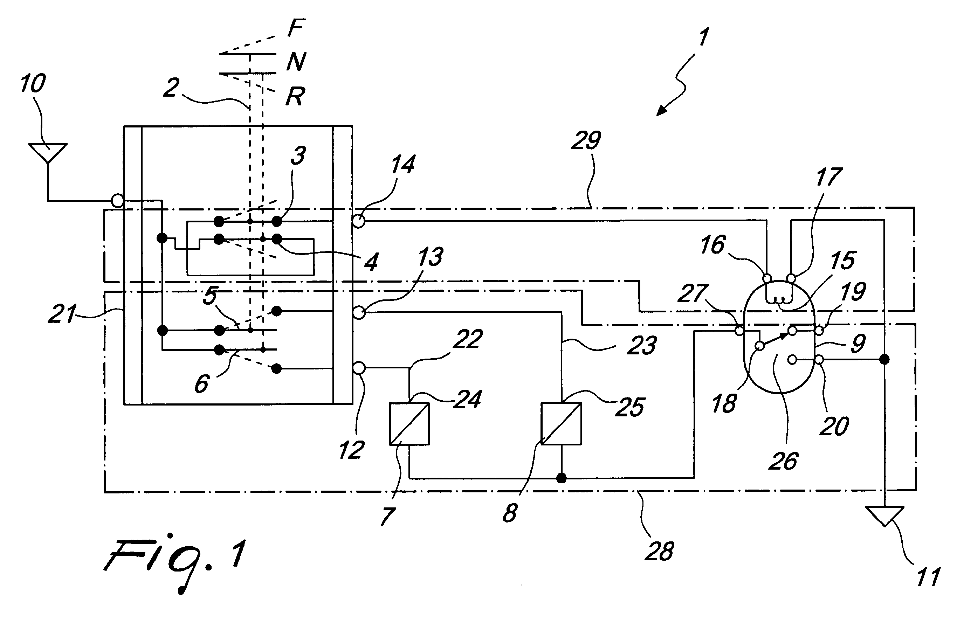

Fig. 1 illustrates an preferred embodiment of the transmission direction control system **1.** Control system **1** may have transmission circuit **28** and a control circuit **29.** Control system **1** may have relay actuators **3, 4** and transmission actuators **5, 6.** The actuators may be located in a housing **21** and may be commonly connected to a control **2,** such as a lever. The lever **2** may have three positions, a neutral position for idling or parking the vehicle, a forward position for moving the vehicle in the forward position, and a reverse position for moving the vehicle in a reverse direction.

Transmission actuators **5, 6** may be connected to solenoid valves **7, 8,** which may actuate a further transmission. Actuators **5** and **6** may be arranged in parallel within transmission circuit **28.** Actuator **5** may be connected to a solenoid valve **8,** which may be responsible for the forward direction of the transmission system. Actuator **6** may be connected to a solenoid valve **7,** which may be responsible for the reverse direction. Actuator 5 may be connected to a first output terminal **13** of a housing **21.**

Terminal **13** may be connected via a first connection element **23** to an input terminal **25** of the forward solenoid valve **8.** Actuator **6** may be connected to a second output terminal **14** of a housing **21.** The terminal **14** may be connected via a second connection element **22** to an input terminal **24** of the reverse solenoid valve **7.** When both the actuators **5, 6** are not actuated the transmission circuit **28** may be open and control system **1** may be in a neutral configuration. In the neutral configuration the vehicle may be in an idle mode, or parking mode.

The output terminals of the solenoid valves **7, 8** may be connected to a input terminal **18** through input terminal **27** of the relay **9.** The input terminal **18** may be the central contact of a relay switch **26.**

The relay switch **26** may connect to a second output terminal **20,** which may be connected with the ground terminal **11** in a first state. The relay switch **26** may connect to an output terminal **19,** which may not have an electrical contact, in a second state. In the second state there may be an open transmission circuit **28.** The relay switch **26** may be activated by a relay coil **15,** such as a magnetic coil of the relay **9.**

Relay actuators **3, 4** may be connected between the power source **10** and the relay **9.** The actuators **3, 4** may be arranged in series, or daisy-chained configuration. The relay actuators **3, 4** are mutually connected to the lever **2** together with the transmission actuator **5, 6** and may be located in the same housing **21.**

A third output terminal **14** may be connected to an input terminal **16** of the relay coil **15** of the relay **9.** The output terminal **17** of the relay coil **15** may be connected to the ground terminal **11.** In an idle mode, the transmission direction control system **1** may be in a neutral configuration where the transmission actuators **5, 6** may not be in contact with the corresponding solenoid valves **7, 8** and the relay actuators **3, 4** may be in the normally-closed position. The normally-closed position of the relay actuators **3, 4** may energize the relay coil **15** so that the relay switch **26** may be actuated into the second state, where transmission circuit **28** is open, by connecting to the first output terminal **19.**

Movement of the lever **2** into either the forward or the reverse direction may cause either one of the actuators **3, 4** to an open position and thereby interrupt the connection from the power source **10** to the input terminal **16** of the relay coil **15,** which may result in deenergizing of the relay coil **15.** The magnetic force of the relay coil **15** may be lost and the contact of the relay switch **26** may move to the first state and connect to relay output terminal **20** which may be connected to ground terminal **11.**

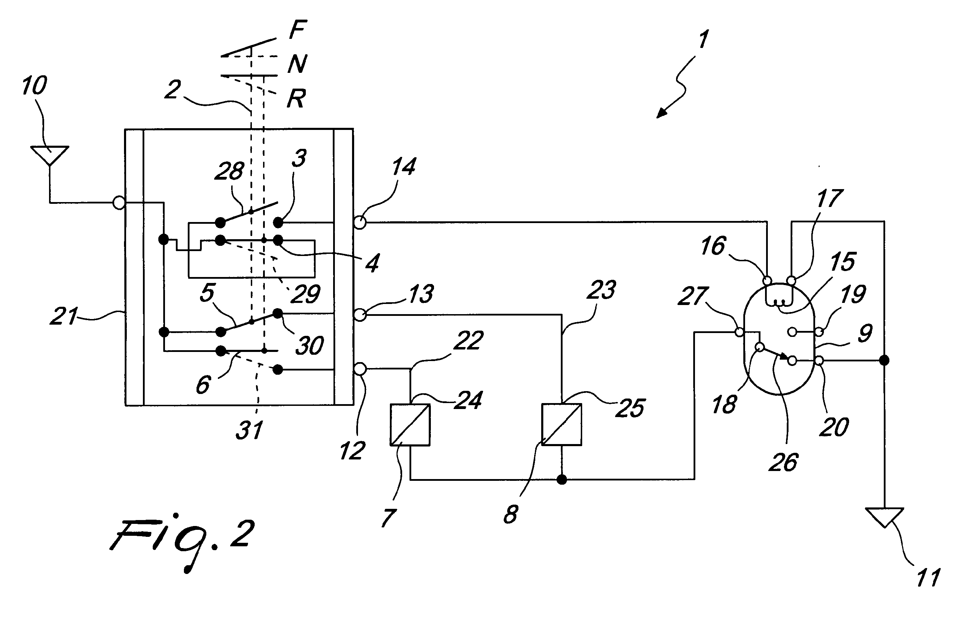

With reference to Fig. 2, lever **2** may be engaged to the forward position for moving the vehicle in a forward direction. The transmission direction control system **1** may be in a forward configuration where the relay actuator **3** may move to an open position and the transmission actuator **5** may move to contact with the output terminal **13.**

With relay actuator **3** in the open position connection between the power source **10** and the input terminal of the relay coil **15** may be interrupted which may de-energize the relay coil **15.** The magnetic force of the relay coil **15** may be lost and the contact of the relay switch **26** may move to contact output terminal **20,** in the first state, which may be connected to ground terminal **11.**

With transmission actuator **5** in contact with output terminal **13** and relay switch **26** in contact with output terminal **20** an electrical connection between power source **10** and the forward solenoid valve **8** may be established.

Lever **2** may be engaged to the reverse position for moving the vehicle in a reverse direction. The transmission direction control system **1** may be in a reverse configuration where the relay actuator **4** may move to an open position and the transmission actuator **6** may move to contact with the output terminal **12.**

With relay actuator **4** in the open position connection between the power source **10** and the input terminal of the relay coil **15** may be interrupted which may de-energize the relay coil **15.** The magnetic force of the relay coil **15** may be lost and the contact of the relay switch **26** may move to contact output terminal **20,** in the first state, which may be connected to ground terminal **11.**

With transmission actuator **6** in contact with output terminal **12** and relay switch **26** in contact with output terminal **20** an electrical connection between power source **10** and the reverse solenoid valve **7** may be established.

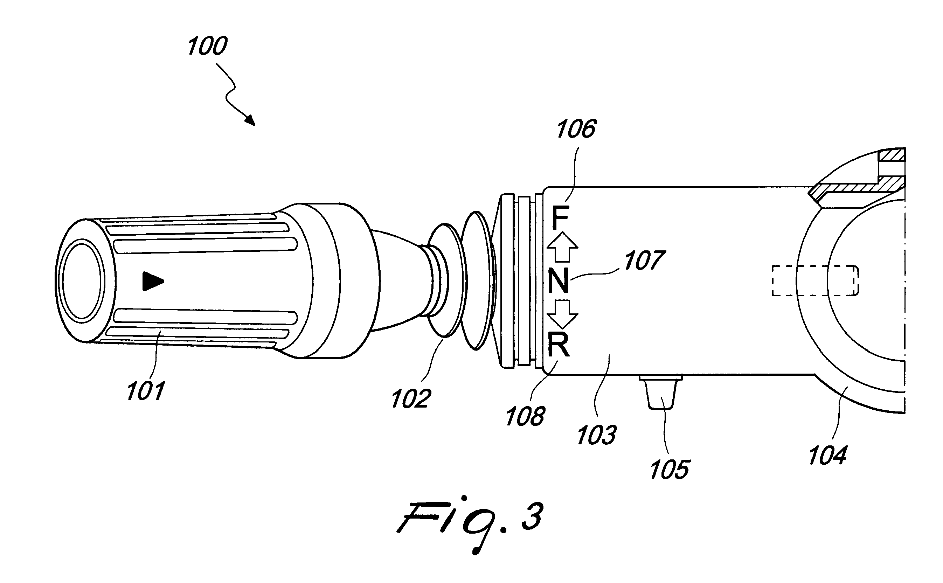

Fig. 3 illustrates a lever control **100,** which may be an embodiment of lever **2.** Lever control **100** for the transmission direction control system **1.** Lever control **100** may comprise an input portion **101,** a connection portion **102** and a housing portion **104.** Lever control **100** may enable an operator of a vehicle to operate the transmission direction control system **1.**

Input portion **101** may be shifted to one of three positions, for instance a forward position, a neutral position and a reverse position. The connection portion **102** connects input portion **101** to the housing portion **103.** The connection portion **102** may be arranged to permit movement of the input portion **101** relative to the housing portion **103.**

Housing portion **103** may include a switch **105** for activating the transmission direction control system **1** and a mounting member **104** for mounting the lever control **100** at a suitable location, for instance on a control panel in a cab of a vehicle. Housing portion **103** may bear markings **106, 107** and **108** to indicate the forward position, the neutral position and the reverse position respectively.

### Industrial Applicability

This disclosure describes a relay control of a transmission direction control system, wherein the relay is arranged in between the lever switch and the ground terminal of a power supply. The relay is adapted to disconnect one of more solenoid valves from the ground terminal when the lever is switched into a neutral position, the neutral position being defined as a position where the vehicle is not moving.

The industrial applicability of the relay control of a transmission direction control system as either part of a transmission system or as an add-on element for existing transmission systems as described herein will be readily appreciated from the foregoing discussion. It is further seen that the relay control of a transmission direction control system arrangement provides for efficient operation of the vehicle. In case a short-circuit occurs, the relay disconnects the transmission direction control solenoid valves so that they may not be activated thereby preventing uncommanded movement of the vehicle. Furthermore the system may allow for efficient maintenance, for instance the relay may be replaced easily. Furthermore, such a system keeps the maintenance low and downtime of the machine to a minimum.

Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein.

Where reference signs follow technical features mentioned in any claim, the reference signs have been included for the sole purpose of increasing the intelligibility of the claims. Neither the reference signs nor their absence have any limiting effect on the technical features as described above or on the scope of any claim elements.

One skilled in the art will realize the invention may be embodied in other specific forms without departing from the invention or essential characteristics thereof.

The foregoing embodiments are therefore to be considered in all respects illustrative rather than limiting of the invention described herein. The scope of the invention is thus indicated by the appended claims, rather than by the foregoing description. Moreover, all changes that come within the meaning and range of equivalence of the claims are therefore intended to be embraced therein.

## Claims

1. A transmission direction control system (1) of a vehicle, comprising:
a transmission circuit (28) having a transmission actuator (5, 6) to activate a corresponding solenoid (7, 8), and **characterised in that** the transmission direction control system (1) further comprises
an actuating switch (26) for controlling an electrical flow through the transmission circuit (28);
a control circuit (29) configured to actuate said switch (26); and
a control (2) configured for electrical communication with the transmission actuator (5, 6) and the control circuit (29) to alternately activate the transmission circuit (28) and the control circuit (29).

2. The control system (1) of claim 1, wherein the transmission circuit (28) comprises at least two transmission actuators (5, 6) arranged in parallel to selectively activate corresponding solenoids (7, 8).

3. The control system (1) of claims 1 or 2, wherein the transmission circuit (28) and the control circuit (29) are arranged in parallel.

4. The control system (1) of any of the preceding claims, wherein the control circuit (29) comprises at least two relay actuators (3, 4) arranged in series for controlling an electrical flow through the control circuit (29).

5. The control system (1) any of the preceding claims, wherein the control circuit (29) comprises a relay coil (15) for actuating switch (26).

6. The control system (1) of claim 5, wherein operation of the relay coil (15) moves the switch (26) between a first state and a second state.

7. The control system (1) of any of the preceding claims, wherein the control (2) is a lever.

8. The control system (1) of claim 6, wherein the lever (2) is coupled to the relay actuators (3, 4).

9. The control system (1) of claims 7 or 8, wherein the lever (2) is actuatable to one of three transmission control positions.

10. The control system (1) of claim 9, wherein said transmission control position comprises a forward position, a reverse position and a neutral position.

11. The control system (1) of claim 10, wherein the transmission circuit (28) is closed and the control circuit (29) is open with the lever (2) in the forward or reverse positions.

12. The control system (1) of claim 10, wherein the transmission circuit (28) is open and the control circuit (29) is closed with the lever (2) in the neutral position.

13. A method of controlling a transmission direction comprising:
actuating a control (2) configured for electrical communication with a transmission circuit (28) and a control circuit (29), said transmission circuit (28) including a transmission actuator (5, 6) to activate a corresponding solenoid (7, 8) and an actuating switch (26), said control circuit (29) being configured to actuate the switch (26), wherein actuation of the control (2) alternately activates the transmission circuit (28) and the control circuit (29) for controlling an electrical flow through the transmission circuit.

14. The method of claim 13, wherein the control (2) is actuatable to one of three transmission control positions: a forward position, a reverse position and a neutral position.

15. The method of claim 14 comprising the step of closing the transmission circuit (28) when the control (2) is in the forward or reverse positions and opening the transmission circuit (28) when the control (2) is in the neutral position.

## Patentansprüche

1. Ein Übertragungsrichtungs-Steuerungssystem (1) eines Fahrzeugs, das Folgendes umfasst:
einen Übertragungskreis (28) mit einem Übertragungsaktor (5, 6) zur Aktivierung einer entsprechenden Magnetspule (7, 8) und **dadurch gekennzeichnet, dass** das Übertragungsrichtungs-Steuerungssystem (1) weiter Folgendes umfasst:
einen Betätigungsschalter (26) zur Steuerung eines elektrischen Flusses durch den Übertragungskreis (28),
einen Steuerkreis (29), der ausgebildet ist, um den Schalter (26) zu aktivieren, und
eine Steuerung (2), die zur elektrischen Kommunikation mit dem Übertragungsaktor (5, 6) und mit dem Steuerkreis (29) ausgebildet ist, zur abwechselnden Aktivierung des Übertraguigskreises (28) und des Steuerkreises (29).

2. Das Steuerungssystem (1) gemäß Anspruch 1, wobei der Übertragungskreis (28) mindestens zwei Übertragungsaktoren (5, 6) umfasst, die zur selektiven Aktivierung entsprechender Magnetspulen (7, 8) parallel angeordnet sind.

3. Das Steuerungssystem (1) gemäß Anspruch 1 oder 2, wobei der Übertragungskreis (28) und der Steuerkreis (29) parallel angeordnet sind.

4. Das Steuerungssystem (1) gemäß einem beliebigen der obigen Ansprüche, wobei der Steuerkreis (29) mindestens zwei Relaisaktoren (3, 4) umfasst, die zur Steuerung eines elektrischen Flusses durch den Steuerkreis (29) seriell angeordnet sind.

5. Das Steuerungssystem (1) gemäß einem beliebigen der obigen Ansprüche, wobei der Steuerkreis (29) eine Erregerspule (15) zur Aktivierung des Schalters (26) umfasst.

6. Das Steuerungssystem (1) gemäß Anspruch 5, wobei die Betätigung der Erregerspule (15) den Schalter (26) zwischen einem ersten Zustand und einem zweiten Zustand bewegt.

7. Das Steuerungssystem (1) gemäß einem beliebigen der obigen Ansprüche, wobei die Steuerung (2) ein Hebel ist.

8. Das Steuerungssystem (1) gemäß Anspruch 6, wobei der Hebel (2) mit den Relaisaktoren (3, 4) gekoppelt ist.

9. Das Steuerungssystem (1) gemäß Anspruch 7 oder 8, wobei der Hebel (2) auf eine von drei Übertragungs-Steuerungspositionen gestellt werden kann.

10. Das Steuerungssystem (1) gemäß Anspruch 9, wobei die Übertragungs-Steuerungsposition eine Vorwärts-Position, eine Rückwärts-Position und eine neutrale Position umfasst.

11. Das Steuerungssystem (1) gemäß Anspruch 10, wobei der Übertragungskreis (28) geschlossen ist und der Steuerkreis (29) offen ist, wenn sich der Hebel (2) in der Vorwärts- oder der Rückwärts-Position befindet.

12. Das Steuerungssystem (1) gemäß Anspruch 10, wobei der Übertragungskreis (28) offen ist und der Steuerkreis (29) geschlossen ist, wenn sich der Hebel (2) in der neutralen Position befindet.

13. Ein Verfahren zur Steuerung einer Übertragungsrichtung, das Folgendes umfasst:
Aktivierung einer Steuerung (2), die zur elektrischen Kommunikation mit einem Übertragungskreis (28) und mit einem Steuerkreis (29) ausgebildet ist, wobei der Übertragungskreis (28) einen Übertragungsaktor (5, 6) einschließt, zur Aktivierung einer entsprechenden Magnetspule (7, 8) und eines Betätigungschalters (26), wobei der Steuerkreis (29) ausgebildet ist, um den Schalter (26) zu betätigen, wobei die Aktivierung der Steuerung (2) abwechselnd den Übertragungskreis (28) und den Steuerkreis (29) zur Steuerung eines elektrischen Flusses durch den Übertragungskreis aktiviert.

14. Das Verfahren gemäß Anspruch 13, wobei die Steuerung (2) auf eine von drei Übertragungs-Steuerungspositionen eingestellt werden kann: eine Vorwärts-Position, eine Rückwärts-Position und eine neutrale Position.

15. Das Verfahren gemäß Anspruch 14, das den Schritt des Schließens des Übertragungskreises (28) umfasst, wenn die Steuerung (2) sich in der Vorwärts- oder Rückwärts-Position befindet, und des Öffnens des Übertragungskreises (28), wenn die Steuerung (2) sich in der neutralen Position befindet.

## Revendications

1. Système de commande de direction de transmission (1) d'un véhicule, comprenant :
un circuit de transmission (28) comportant un actionneur de transmission (5, 6) pour activer un solénoïde correspondant (7, 8), et **caractérisé en ce que** le système de commande de direction de transmission (1) comprend en outre :
un interrupteur d'actionnement (26) pour commander le passage d'un courant électrique dans le circuit de transmission (28) ;
un circuit de commande (29) configuré pour actionner ledit interrupteur (26) ; et
une commande (2) configurée pour communiquer de façon électrique avec l'actionneur de transmission (5, 6) et le circuit de commande (29) pour activer alternativement le circuit de transmission (28) et le circuit de commande (29).

2. Système de commande (1) selon la revendication 1, dans lequel le circuit de transmission (28) comprend au moins deux actionneurs de transmission (5, 6) disposés en parallèle pour activer sélectivement les solénoïdes correspondants (7, 8).

3. Système de commande (1) selon la revendication 1 ou 2, dans lequel le circuit de transmission (28) et le circuit de commande (29) sont montés en parallèle.

4. Système de commande (1) selon l'une quelconque des revendications précédentes, dans lequel le circuit de commande (29) comprend au moins deux actionneurs de relais (3, 4) montés en série pour commander le passage d'un courant électrique dans le circuit de commande (29).

5. Système de commande (1) selon l'une quelconque des revendications précédentes, dans lequel le circuit de commande (29) comprend une bobine de relais (15) pour actionner l'interrupteur (26).

6. Système de commande (1) selon la revendication 5, dans lequel le fonctionnement de la bobine de relais (15) provoque un déplacement de l'interrupteur (26) entre un premier état et un deuxième état.

7. Système de commande (1) selon l'une quelconque des revendications précédentes, dans lequel la commande (2) est un levier.

8. Système de commande (1) selon la revendication 6, dans lequel le levier (2) est couplé aux actionneurs de relais (3, 4).

9. Système de commande (1) selon la revendication 7 ou 8, dans lequel le levier (2) peut être actionné pour être mis dans une position parmi trois positions de commande de transmission.

10. Système de commande (1) selon la revendication 9, dans lequel ladite position de commande de transmission comprend une position avant, une position arrière et une position neutre.

11. Système de commande (1) selon la revendication 10, dans lequel le circuit de transmission (28) est fermé et le circuit de commande (29) est ouvert quand le levier (2) est dans la position avant ou arrière.

12. Système de commande (1) selon la revendication 10, dans lequel le circuit de transmission (28) est ouvert et le circuit de commande (29) est fermé quand le levier (2) est dans la position neutre.

13. Procédé de commande d'une direction de transmission comprenant :
l'actionnement d'une commande (2) configurée pour communiquer de façon électrique avec un circuit de transmission (28) et un circuit de commande (29), ledit circuit de transmission (28) comprenant un actionneur de transmission (5, 6) pour activer un solénoïde correspondant (7, 8) et un interrupteur d'actionnement (26), ledit circuit de commande (29) étant configuré pour actionner l'interrupteur (26), dans lequel l'actionnement de la commande (2) active alternativement le circuit de transmission (28) et le circuit de commande (29) pour commander le passage d'un courant électrique dans le circuit de transmission.

14. Procédé selon la revendication 13, dans lequel la commande (2) peut être actionnée pour être mise dans une position parmi trois positions de commande de transmission : une position avant, une position arrière et une position neutre.

15. Procédé selon la revendication 14, comprenant l'étape consistant à fermer le circuit de transmission (28) quand la commande (2) est dans la position avant ou arrière et à ouvrir le circuit de transmission (28) quand la commande (2) est dans la position neutre.
